# EUROPEAN PATENT APPLICATION

(11) **EP 4 265 322 A1**
(43) Date of publication of application: **25.10.2023**
(21) Application number: 22169396.3
(22) Date of filing: 22.04.2022
(51) Int. Cl.: B01D 53/74, C01B 23/00, F25J 3/08, F25J 3/02

(54) **HELIUM RECOVERY PROCESS**

(71) Applicant: L'AIR LIQUIDE, SOCIETE ANONYME POUR L'ETUDE ET L'EXPLOITATION DES PROCEDES GEORGES CLAUDE, 75007 Paris (FR); AIR LIQUIDE Electronics GmbH, 40235 Düsseldorf (DE)
(72) Inventor: LINDT, Stefan, 01458 Ottendorf-Okrilla (DE)
(74) Representative: Air Liquide

(57) **Abstract**

Process for the recovery of helium from one or more than one helium-containing off-gas streams by successive preconditioning, cryogenic separation and purification, whereby the off-gas preconditioning takes place a multi-stage preconditioning unit 10, said preconditioning unit 10 comprising n stage units S1 to Sn, with n ≥ 2, each stage unit S1 to Sn being adapted to precondition off-gas by at least partially chemically converting at least one component other than helium in the off-gas and/or by at least partially removing at least one component other than helium from the off-gas, the stage units S1 to Sn being in linear fluid succession so that off-gas which has been preconditioned in stage unit Sx, with 1 ≤ x < n, is sent to stage unit Sx+1 for further preconditioning, whereas off-gas which has been preconditioned in stage unit Sn is sent as the preconditioned off-gas to the cryogenic separation unit (20), the preconditioning unity 10 further comprising multiple off-gas inlets 61, 62, each off-gas inlet 61, 62 corresponding to one of the stage units S1 to Sn so that the off-gas of an off-gas stream introduced into the preconditioning unit 10 via one of the off-gas inlets 61, 62 is thereafter preconditioned in the corresponding stage unit, process whereby for each off-gas stream from which helium is to be recovered, components other than helium which are present in the off-gas and which are to be chemically converted and/or removed therefrom in the preconditioning unit 10 are determined and the off-gas inlet 61, 62 via which said off-gas stream is introduced into the preconditioning unit 10 is selected in function of said determined components.

## Description

The present invention relates to recovery of helium from various helium-containing off-gas streams.

The present invention is of particular interest for the recovery of helium from off-gases from semiconductor fabrication plants, commonly called "FABs".

Within the semiconductor manufacturing process, helium is used for different applications. Following its use, the inert helium is typically evacuated as an off-gas ingredient to an exhaust system where it is mixed with other waste-gas streams and, after final cleaning to remove certain pollutants, released into the atmosphere. The cleaning methods applied depend on the detailed composition of the waste gas streams.

Once the helium has reached the atmosphere there is no economically cost-effective way to recover it.

As a consequence of the wide range of helium applications, helium-containing off-gases are produced of varying composition, both as regards helium content and as regards the nature and concentration of other ingredients/components, such as hydrocarbons, fluorine-, chlorine- and sulfur-containing compounds. The cleaning methods applied to the off-gases to remove pollutants therefrom depend on the detailed composition of the off-gases.

With their large demand of-high purity helium and given the high purchase price of high- purity helium, the possibility of recovering and reusing helium contained in off-gases from semiconductor FABs has a high potential for optimising their operation cost by recovery and reuse of helium.

In EP-A-1452221, a method is described whereby exhaust gas discharged from a gas using facility is collected, to said exhaust gas discharged from the gas using facility a replenishing gas of the same components as an effective component gas is added, and the effective component gas is then separated therefrom and purified and supplied to the gas using facility. According to a specific embodiment, the effective component gas is argon, krypton or xenon and the gas using facility is a plasma oxidation device.

From WO-A-2010/070454, it is known to recover helium from cluster tools used in semiconductor fabrication. In one embodiment, the proposed system allows for the recovery of helium from a mixed waste gas from a processing chamber or a cluster tool when a predetermined amount of helium is known to be present in the waste gas. In a further embodiment, analyzing means are used to determine the amount of helium present in the mixed waste gas and, when that amount warrants, the helium is recovered from the waste gas in a dedicated rare gas recovery process.

The method according to WO-A-2010/070454 thus relates to helium recovery from the mixed waste-gas stream and has very limited flexibility: the helium contained in the mixed waste-gas stream is either allowed to go to waste, when the helium content of the mixed waste-gas stream is below a predetermined level, or is recovered, when said helium content is above said predetermined level.

How the helium is to be recovered from the mixed waste-gas stream is not disclosed in WO-A-2010/070454, nor is, obviously, any provision made in WO-A-2010/070454 for the recovery of helium from waste-gas streams with varying composition as regards the nature and concentration of ingredients other than said helium.

From EP-A-0983791, it is known to recover a noble gas exhausted from a noble-gas-employing system, to purify the recovered noble gas to the required purity and to supply the purified noble gas to the noble-gas-employing system, thereby reducing the consumption of the noble gas. According to said method, the exhaust gas exhausted by the noble-gas-employing system is either disposed of or subjected to helium recovery therefrom, whereby whether or not helium is recovered from the exhaust gas exhausted by the noble-gas-employing system depends on the content of impurity components contained in the exhaust gas and optionally also on the running state of the noble-gas-employing system.

Again, no provision made for the recovery of noble gas from exhaust gases with different contents of so-called impurity components.

There thus remains a need for a method or process capable of recovering helium from off-gases of different composition, in particular as regards the nature and concentration of components other than helium in said off-gases.

Thereto, the present invention proposes a process for the recovery of helium from one or more than one helium-containing off-gas streams, whereby the off-gas streams are treated successively by preconditioning, cryogenic separation and purification.

The preconditioning, cryogenic separation and purification of the off-gas stream or streams takes place in an installation comprising, in order of succession:
- a preconditioning unit which preconditions the off-gas from the stream or streams so as to obtain preconditioned off-gas;
- a cryogenic separation unit which receives the preconditioned off-gas from the preconditioning unit and which cryogenically separates a helium-enriched gas fraction from said preconditioned off-gas; and
- a purification unit which receives the helium-enriched gas fraction received from the cryogenic separation unit and which purifies said helium-enriched gas fraction so as to obtain purified helium gas.

In accordance with the invention, the preconditioning unit is a multi-stage preconditioning unit, comprising stage units S1 to Sn, whereby n is at least 2.

Each one of said stage units S1 to Sn is adapted to precondition off-gas supplied thereto by at least partially chemically converting at least one component other than helium in the off-gas and/or by at least partially removing at least one component other than helium from the off-gas. The preconditioning of the off-gas in a multi-stage preconditioning unit makes it possible to allow helium to be recovered from off-gases with a wide range of components other than helium, in that different preconditioning stages may be used to remove different components, other than helium, from the off-gas ahead of the cryogenic separation unit.

The stage units S1 to Sn are in linear fluid succession. In other words, off-gas which has been preconditioned in stage unit Sx, with x ranging from 1 to n-1, is sent to the next stage unit, i.e. to stage unit Sx+1 for further preconditioning. Off-gas which has been preconditioned in stage unit Sn is sent to the cryogenic separation unit as the preconditioned off-gas.

In addition to stage units S1 to Sn and in order to optimise their operation, the multi-stage preconditioning unit may optionally comprise means for adjusting the temperature and/or pressure of the off-gas upstream of one or more of stage units S1 to Sn. For example, when the preconditioning process in a given stage unit Sy (with 1 ≤ y ≤ n) requires an off-gas pressure Py, but off-gas is sent to said stage unit Sy (from stage unit Sy-1 (when y>1) and/or from other sources) at a pressure Pg which is lower or higher than Py, then the multi-stage preconditioning unit may comprise a compressor, respectively a gas expander/decompressor, adapted to adjust the pressure of the off-gas to pressure Py before introducing said off-gas into stage unit Sy.

Similarly, if, for optimum efficiency of the preconditioning process taking place in stage unit Sz (with 1 ≤ z ≤ n), the off-gas must be at a temperature Tz, the multi-stage preconditioning unit may comprise a cooler or heater for cooling, respectively heating off-gas which is sent to stage unit Sz to temperature Tz before introducing said off-gas into stage unit Sz.

The cryogenic separation unit of the installation used in the process according to the invention receives the preconditioned off-gas from the preconditioning unit, more specifically from stage unit Sn, and cryogenically separates a helium-enriched gas fraction from said preconditioned off-gas.

The purification unit of the installation purifies the helium-enriched gas fraction received from the cryogenic separation unit so as to obtain purified helium gas with a higher helium content than the helium-enriched gas. The level of purification, i.e. the degree of purity of the purified helium gas, depends on the intended use of the purified helium gas. For example, when the purified helium gas is intended to be recycled for use in a process or device which has generated the or one of the helium-containing off-gas streams, then the helium-enriched fraction is purified to a level so that the purified helium is suitable for use in said process or device.

As indicated above, it is an aim of the present invention to provide a method or process capable of recovering helium from off-gases of varying composition, in particular as regards components other than helium. Moreover, it is an aim to do so in a cost-effective manner. Thereto, the multi-stage preconditioning unit used in accordance with the present invention has multiple off-gas inlets. Each one of said off-gas inlets corresponds to one of the stage units S1 to Sn so that the off-gas of an off-gas stream introduced into the preconditioning unit via an off-gas inlet corresponding to stage unit Sw (with 1 ≤ w ≤ n) is first preconditioned in stage unit Sw, and, when w < n, thereafter in subsequent stage unit(s) Sw+1 to Sn.

According to the invention, for each off-gas stream from which helium is to be recovered, the components other than helium which are present in the off-gas and which are to be chemically converted and/or removed therefrom in the preconditioning unit are determined.

The off-gas inlet via which said off-gas stream is introduced into the multi-stage preconditioning unit is then selected in function of these determined components.

The selection of an off-gas inlet for a given off-gas stream also determines the stage units of the preconditioning unit in which the off-gas from said stream will be preconditioned. For example, when an off-gas stream is supplied to the preconditioning unit via inlet Iv corresponding to stage unit Sv, with 1 ≤ v ≤ n, the off-gas from said stream is first preconditioned in stage unit Sv and then successively in stage unit(s) Sv+1 to Sn, if v < n. Moreover, when v > 1, the off-gas from said stream is not subjected to preconditioning in stage unit(s) S1 to Sv-1.

By selecting for a given off-gas stream, the off-gas inlet Iv so that (a) the number of the stage units in which off-gas from said stream is preconditioned is minimised (in that the off-gas is not preconditioned in stage units S1 to Sv-1 upstream of the off-gas inlet Iv, when v >1), while (b) ensuring that the components of the off-gas from said stream, other than helium, which are to be converted and/or removed during the preconditioning step are effectively converted and/or removed during the preconditioning of said off-gas in stage unit(s) Sv to Sn, downstream of inlet Iv.

By thus limiting the preconditioning stages to which a particular off-gas stream is subjected in function of the composition of the off-gas stream, the cost-efficiency of the helium-recovery process is improved and more helium can be recovered, in particular when off-gas streams of which the composition varies significantly over time and/or when helium is to be recovered simultaneous from off-gas streams of different composition.

Preferably, the helium-enriched gas fraction obtained by cryogenic separation in the cryogenic separation unit has a helium content of at least 95.0000 %vol, preferably at least 99.0000 %vol but less than 100.0000 %vol. For example, the helium content of the helium-enriched fraction may be ≤ 99.9700 %vol or ≤ 99.9500 %vol.

As indicated above, the level of purification to which the helium-enriched fraction is subjected depends on the intended subsequent use of the recovered helium. For example, when the helium is intended to be used in a semiconductor fabrication plant and in particular in a semiconductor factoring tool, the helium-enriched fraction is advantageously purified so as to obtain a purified helium gas with a helium content of at least 99.9900 %vol and up to 100.0000 %vol, preferably 99.9990 %vol, more preferably at least 99.9999 %vol.

In many cases, the components other than helium which are present in a given off-gas stream and which are to be chemically converted and/or removed therefrom in the preconditioning unit are already known, for example due to the nature of the process and/or device which generates the particular off-gas stream or from earlier measurements conducted on one or more off-gas streams generated by the same process and/or device. In that case the off-gas inlet Iv via which the off-gas stream is to be introduced into the multi-stage preconditioning unit can be selected on the basis of the available information regarding the composition of the off-gas stream.

The process may also include a step of chemically analysing the off-gas stream or one or more of the off-gas streams in order to determine the components other than helium which are present in the off-gas of said off-gas stream and which are to chemically converted and/or removed therefrom in the preconditioning unit.

The present invention is useful for the recovery of helium from helium-containing off-gases from semiconductor fabrication plants, in particular, but not exclusively, for the recovery of helium from helium-containing off-gases from semiconductor facturing tools. Semiconductor facturing tools produce or modify semiconductors. Examples of such semiconductor facturing tools are CVD (Chemical Vapour Deposition) tools, etching tools and photolithography tools. Other potential sources of helium-containing off-gas in a semiconductor manufacturing plant include instruments using helium.

According to a preferred embodiment of the invention, the purified helium is used in one or more installations or processes of the same type as the installations or processes which have generated a helium-containing off-gas stream(s) from which the purified helium has been recovered. The purified helium is preferably recycled for use in the installation(s) or process(es) which actually generated a helium-containing off-gas stream from which the purified helium has been recovered. For example, when helium is recovered from one or more helium-containing off-gas streams generated by a semiconductor fabrication plant/by semiconductor facturing tools, recovered purified helium is preferably recycled for use in a semiconductor fabrication plant/semiconductor facturing tools, preferably in the same semiconductor fabrication plant/the same semiconductor facturing tools.

The present invention thus also covers a process for manufacturing semiconductors. The manufacturing process includes the step of producing semiconductors in a semiconductor production installation, during which step helium-containing off-gas is generated, and further comprises the step of collecting one or more streams of helium-containing off-gas from the semiconductor production installation, for example from one or more semiconductor factoring tools and/or from related process equipment of said semiconductor production installation, such as test or analysis equipment which generates helium-containing off-gas, whereafter purified helium is recovered from said one or more collected off-gas streams by means of any embodiment of the previously described helium recovery process.

The thus recovered purified helium is preferably recycled for use in the semiconductor production installation, such as, in particular, for use in one or more semiconductor factoring tools and/or the related helium-using process equipment.

Stage units S1 to Sn of the multi-stage preconditioning unit may advantageous include, or even consist of one or more stage units selected from off-gas combustion units, off-gas washing units (also referred to as "off-gas washer"), condensation units, activated-carbon units, catalytic oxidation units, adsorption units and filter units, whereby multiple stage units of the same category/type may be present in the multi-stage preconditioning unit.

The number n, nature and succession of the stage units S1 to Sn of the preconditioning unit are selected in function of the nature of the helium-containing off-gas stream or streams, in particular in function of the range of components other than helium present therein and the concentration range of said components in the off-gas stream or streams, so as to ensure the effective conversion/removal of said components during the preconditioning.

Off-gas combustion stage units for the multi-stage preconditioning unit may, for example, be selected from the group consisting of electrically heated combustors, with or without oxidant injection into the combustor, and fuel-heated combustors (such as natural-gas heated combustors), with or without oxidant injection into the combustor. When oxidant is injected into the combustor, the oxidant may be air, oxygen-enriched air or oxygen with a purity between 90 and 100 %vol. The injection of oxygen as oxidant in the combustor is generally preferred, as it (substantially) avoids diluting the corresponding off-gas stream with nitrogen and thus facilitates the subsequent cryogenic separation and purification steps.

Off-gas washing stage units may be selected from the group consisting of: fresh-water washers, KOH washers, NaOH washers. When the preconditioning unit comprises a succession of at least two of these washers, a fresh-water washer is preferably present as the final washer of the succession.

Condensation stage units may be coolant-cooled heat exchanger and separator units, whereby the coolant may be water or another coolant fluid.

Suitable off-gas catalytic-oxidation stage units may be heterogeneous catalytic-oxidation units, in particular with palladium and or silver as a catalytic active component.

Adsorption units may be selected from: adsorption units with aluminium-oxide adsorbents and/or with molecular-sieve adsorbents.

When, in addition to the n stage units, the preconditioning unit comprises off-gas temperature adjustment means/units (cooler or heater) for cooling or heating the off gas upstream of one of the stage units S1 to Sn by heating or cooling, these means may usefully be selected from the following group: electrical gas heating units, gas/gas heat exchange units, gas/liquid heat exchange units and adiabatic compression heaters. Such off-gas temperature adjustment means/units make it possible to adjust the temperature of the off-gas before it is sent to the next stage unit and thereby to optimise the next preconditioning stage (in said next stage unit).

The nature and order of the stage units, and any additional temperature- or pressure-adjustment means/units, in the multi-stage preconditioning unit is selected in function of the composition of the helium-containing off-gas stream(s) to be preconditioned therein, in particular in function of the components to be removed therefrom, and the processes used for same.

For example:
- when a helium-containing off-gas stream contains more than 1 %vol combustible organic substances, said off-gas stream can advantageously be introduced into the preconditioning unit via an off-gas inlet corresponding to or upstream of an off-gas combustion stage unit;
- when a helium-containing off-gas stream contains more than 100 ppm halogenes and/or halogenic acids and/or metallic compounds, said off-gas stream can advantageously be introduced into the preconditioning unit via an off-gas inlet corresponding to or upstream of an off-gas combustion stage unit;
- when a helium-containing off-gas stream contains no halogenes and/or halogenic acids and/ or combustible organic substances, said off-gas stream may be introduced into the preconditioning unit via an off-gas inlet corresponding to or upstream of an off-gas adsorption stage unit;
- when a helium-containing off-gas stream contains more than 100 ppm vol. hydrogen and/or carbon monoxide, said off-gas stream can advantageously be introduced into the preconditioning unit via an off-gas inlet corresponding to or upstream of an off-gas combustion stage unit and/or of a catalytic oxidation stage unit.

The preconditioning unit may, for example, comprise one of the following combinations:
- an off-gas combustion stage unit and an off-gas washer downstream of the off-gas combustion stage unit;
- an off-gas washer, a condensation stage unit downstream of the off-gas washer and an activated-carbon stage unit downstream of the condensation stage unit;
- an adiabatic compression heater, a catalytic oxidation stage unit downstream of the adiabatic compression heater, an off-gas cooling unit downstream of the catalytic oxidation stage unit and an adsorption stage unit downstream of the off-gas cooling unit;
- an off-gas heating unit and a catalytic oxidation stage unit downstream of the off-gas heating unit;
- an adsorption stage unit and a gas filter stage unit downstream of the adsorption unit.

The aim of the off-gas preconditioning is to generate a preconditioned off-gas stream adapted for the cryogenic separation of a helium-enriched fraction therefrom in the subsequent cryogenic separation process/step and the purification of said helium-enriched fraction in the subsequent purification process/step. In particular, the preconditioning step aims to remove from the different helium-containing off-gas streams those components which may, in the short or long term, reduce the efficiency of these subsequent processes/steps and/or may remain as impurities in the purified helium.

It is a major advantage of the process according to the present invention that helium-containing off-gas streams are not systematically subjected to the entire multi-stage preconditioning process. Instead, individual off-gas streams can be introduced into the preconditioning unit at the latest stage which still enables adequate preconditioning of the off-gas stream upstream of the cryogenic separation step. Thus, whereas certain helium-containing off-gas streams may have to be preconditioned in the entire chain of stage units S1 to Sn, other off-gas streams may be introduced into the preconditioning unit at a later stage and only have to be subjected to preconditioning in stage units Sx to Sn, with x > 1. Similarly, when helium is to be recovered from a helium off-gas stream, the composition of which varies over time, the number of preconditioning stages may be adapted, and in particular reduced, in function of its composition at a given moment in time Thus, the process according to the present invention makes it possible to reduce the operation costs of the preconditioning unit and thus of the entire helium-recovery process. In addition, the present invention also makes it possible to reduce the size and thus the material costs of certain preconditioning stage units at the beginning of the chain of preconditioning stage units, because not all off-gas streams must be subjected to preconditioning in every stage unit starting with S1.

During cryogenic separation in the cryogenic separation unit, a helium-enriched gas fraction is separated from the preconditioned off-gas obtained by preconditioning Useful examples of such cryogenic separation processes include:
- cryogenic distillation, and
- cryogenic condensation.

Suitable cryogenic distillation and condensation units and processes are known in the art.

During purification in the purification unit, the helium-enriched gas fraction obtained by cryogenic separation is purified so as to obtain the purified helium gas.

Useful examples of such purification processes include:
- adsorption processes, and
- processes comprising catalytic oxidation followed by adsorption.

Suitable helium purification processes are likewise known in the art.

As indicated earlier, the process according to the present invention is particularly useful for recovering helium from helium-containing off-gases generated during semiconductor manufacturing.

According to a preferred embodiment of the present invention, the helium-containing off-gas stream(s) or at least some of the helium-containing off-gas streams from which helium is recovered is/are selected from helium-containing off-gas streams generated:
- by a semiconductor factoring tool using helium as carrier gas, in particular as carrier gas to transport volatile chemicals, and/or
- by a semiconductor factoring tool using helium as an inert diluent gas, and/or
- by a semiconductor factoring tool using helium as heat transfer medium, and/or
- by a semiconductor factoring tool using helium for cooling, for example for back-side wafer cooling or for cooling the lens of a photolithography tool, and/or
- by equipment providing an inlet into or an outlet from a semiconductor factoring tool or allowing material transfer between semiconductor factoring tools, such as load locks, using helium to maintain a constant temperature, and/or
- by any tool using helium for leak testing.

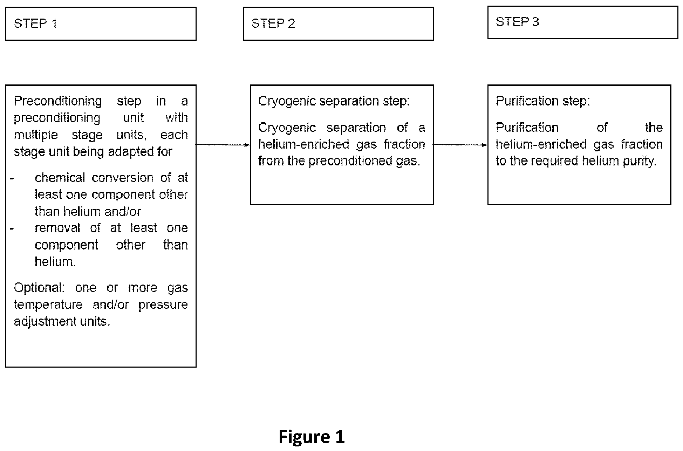

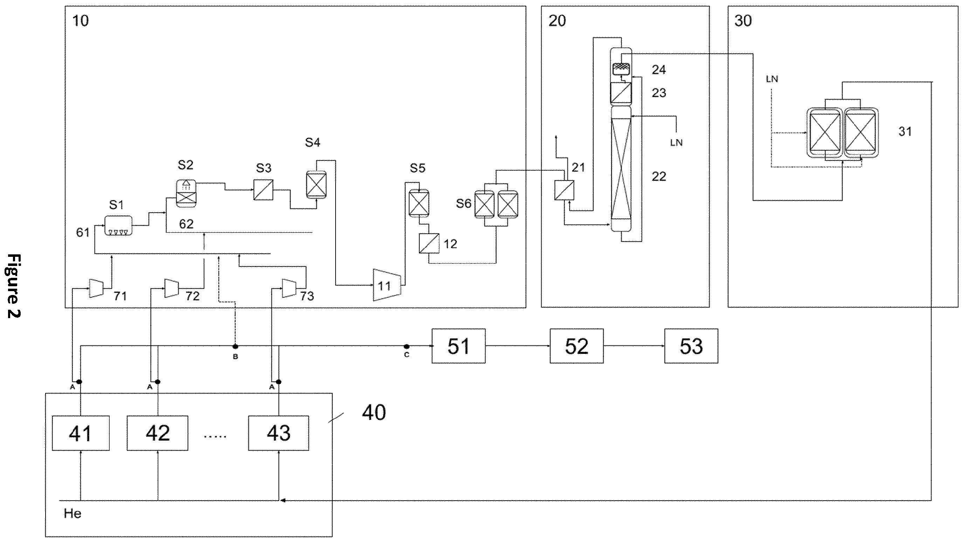

The present invention and its advantages are illustrated in the following non-limiting examples, reference being made to figures 1 and 2, whereby:
- figure 1 is a schematic representation of the succession of steps in the process according to the invention;
- figure 2 is a more detailed schematic representation of an embodiment of the process according to the present invention and a corresponding helium-recovery installation.

As illustrated in figure 1, according to the present invention, the one or more helium-containing off-gas streams are subjected successively to preconditioning, cryogenic separation and purification in corresponding units specifically designed for the purpose.

During the preconditioning step, components other than helium are removed from the one or more helium-containing off-gas streams, for example by means of one or more of the following processes: combustion, chemical (e.g. KOH or NaOH) and/or water washing, filtration, etc. The main purpose of the preconditioning step is to ensure stable and efficient process conditions for the subsequent cryogenic separation step by removing components from the off-gas stream(s) which are liable to affect the cryogenic separation.

Preferably, at the end of the preconditioning step, the preconditioned off-gas consists essentially of helium and air gases, more preferably of helium, nitrogen, oxygen and argon. The term "air gases" refers to the gases present in atmospheric air. In the present context, the term "essential consisting of' means that the preconditioned gas consists for between 99.0000 and 100.0000 %vol of helium and air gases, in particular of helium, nitrogen, oxygen and argon.

Preferably, at the end of the preconditioning step, the preconditioned off-gas consists for 70.0000 %vol to 100.0000 %vol, or even 78.0000 %vol to 100.0000 %vol of helium and nitrogen.

During the cryogenic separation step (step 2), a helium-enriched gas fraction is separated off from the preconditioned gas by cryogenic separation. Typically, in said cryogenic separation step, a liquified nitrogen phase is separated from a helium-enriched fraction in gaseous form.

During the purification step (step 3) the helium-enriched fraction is further purified so as to obtain purified helium gas with a level of purity which meets the requirements of the intended subsequent use of the helium gas. In particular, if the purified helium gas is to be recycled back to the installation(s) or one of the installations which generate the one or more helium-containing off-gas streams, the helium-enriched fraction is purified to the level of purity required for its use in said installation.

A useful example of a purification step or substep which may be used in the process according to the invention is purification with activated carbon, in particular cryogenic purification with activated carbon, which permits the removal of traces of inter alia nitrogen from the helium-enriched fraction.

After purification, the purified helium may be stored in containers for storage or transport or may immediately be directed to its point or points of use via a pipeline or manifold. The pipeline or manifold may comprise elements such as valves for directing and controlling the flow of the purified helium, compressors and/or expanders for regulating the pressure of the purified helium and coolers and/or heaters for controlling the temperature of the purified helium.

It is an essential aspect of the process according to the present invention, that the preconditioning of the one or more helium-containing off-gas streams takes place in a multi-stage preconditioning unit which comprises n stage units S1 to Sn, with n ≥ 2, in linear succession. Each one of said units S1 to Sn is adapted to convert at least one component other than helium in the off-gas and/or to remove at least one component other than helium from the off-gas.

Figure 2 shows an embodiment of the present invention, whereby the preconditioning unit comprises a succession of six stage units S1 to S6.

The installation used for recovering helium from helium-containing off-gas streams comprises a preconditioning unit 10, a cryogenic separation unit 20 and a purification unit 30.

Each of the six stage units S1 to S6 is designed to remove and/or chemically convert a non-helium component of the off-gas treated therein.

In the illustrated embodiment, stage unit S1 is an off-gas combustor or incinerator. Stage unit S1 may be heated by the combustion of fuel, such a natural gas or hydrogen therein. Other means may also be used to raise the temperature in stage unit S1 so as to ensure that combustible substances, such as organic halogenics, volatile combustible toxic gases, hydrocarbons and organometallic compounds, present in the off-gas are combusted/incinerated/oxidised.

Off-gas which has thus been preconditioned in stage unit S1 is sent to stage unit S2. In stage unit S2, off-gas coming from preceding stage unit S1 and/or off-gas supplied directly to stage unit S2 is subjected to chemical washing with a KOH and/or NaOH solution. During the chemical washing, oxides, such as those generated by oxidation in stage unit S1, are removed from the off-gas. Other non-helium compounds, such as halogenic acid(s) can also be removed from the off-gas by this preconditioning method. Stage unit S3 is a cold drying unit, in which moisture is removed from the off-gas treated therein. Moisture may be present in the helium-containing off-gas streams from which helium is to be recovered. Moisture may also be generated in the off-gas or be absorbed by the off-gas during preconditioning in preceding stage units. For example, moisture may be generated during off-gas oxidation in a preceding combustion or incineration stage unit (such as S1) and/or absorbed in a preceding washing stage unit (such as S2). Off-gas preconditioned in stage unit S3 is sent to stage unit S4. In stage unit S4, the off-gas is treated with activated carbon. In this manner, toxic metals present, such as Ar and Ge, can be removed from the off-gas. The next stage unit, in the embodiment illustrated in figure 2, is catalytic oxidation unit S5. In catalytic oxidation unit S5, components in the off-gas, such as H₂ and CO, which are difficult to separate from helium by cryogenic separation are oxidized by catalytic oxidation. Catalysts suitable for this purpose are known in the art. One particular such catalyst contains 0.5 %wt Pd and 5 %wt Ag as catalytically active substances. Such catalytic oxidation is effective within a specific temperature range and requires heating of the off-gas upstream of catalytic oxidation unit S5. In the illustrated embodiment, the off-gas is heated by compression in compressor 11. Following the catalytic oxidation in stage unit S5, the off-gas is cooled in cooler 12. Cooler 12 may be a cooler-condenser, in which case part of the moisture generated by catalytic oxidation in stage unit S5 is removed from the off-gas in cooler-condenser 12. Thus, when cooler 12 is a cooler-condensor, cooler 12 de facto constitutes a further preconditioning stage unit, in that the cooler-condensor removes moisture, i.e. a non-helium component, from the off-gas cooled therein. It will be appreciated that preconditioning unit 10 may comprise several stage units of the same type, such as multiple moisture removal stage units or multiple filter stage units at different positions along the succession of stage units. In the illustrated embodiment, the next stage unit S6 is an adsorption unit in which substantially all CO₂ and moisture, such as, in particular, the CO₂ and moisture (or remaining fraction thereof) generated by catalytic oxidation in preceding stage unit S5, is removed from the off-gas. Stage unit S6 is an alternating bed adsorption unit. Alumina and/or molecular sieves may be used as adsorption medium in stage unit S6.

The off-gas leaving final stage unit S6, i.e. the preconditioned off-gas, consists almost entirely of helium and nitrogen and is sent to cryogenic separation unit 20.

In the illustrated embodiment, cryogenic separation unit 20 comprises heat exchanger 21, distillation column 22, a head condenser 23 and a phase separator 24.

To separate the helium from the nitrogen in the preconditioned off-gas, the pre-conditioned off-gas is cooled to a cryogenic temperature in heat exchanger 21 and sent to the bottom of distillation column 22. In column 22, the cooled preconditioned off-gas is separated so as to form a nitrogen-rich liquid with a reduced helium content at the bottom of column 22 and a nitrogen-rich gas with an increased helium content at the top of column 22. The nitrogen-rich gas is completely condensed in head condenser 23 at the top of column 22 by heat exchange with the nitrogen-rich liquid, thereby vaporising the nitrogen rich liquid to form a waste gas which is used to cool down the preconditioned off-gas in heat exchanger 21. Extraneous liquid nitrogen LN is used as a cold source for column 22.

Head condenser 23 is operated at a temperature which is insufficient to condense helium. A phase separator 24 is installed on the highest piping point of the outlet side of head condenser 23.

Phase separator 24 is fed with the non condensable helium and the liquified nitrogen In the steady state of the process there will be an equilibrium between a helium-enriched gas fraction and a liquid nitrogen phase in phase separator 24.

The level in the phase separator 24 can be controlled by releasing the helium-enriched gas fraction from phase separator 24, using, for instance, a constant setpoint as main control strategy. A secondary control strategy maintains a constant pressure in phase separator 24 so that helium gas collects in head condenser 23.

The nitrogen gas condensed in head condenser 23 is sent back to the top of column 22 as reflux, so that column 23 operates as a total reflux column.

The helium-enriched fraction leaving helium separator 24 consists mainly of helium, but may still contain traces of nitrogen, which may have to be removed before the helium can be reused.

Thereto, the helium-enriched fraction is sent from cryogenic separation unit 20 to purification unit 30.

In the illustrated embodiment, purification unit 30 comprises a cryogenic alternating activated-carbon adsorption unit 31 capable of removing essentially all nitrogen from the helium-enriched fraction. Liquid nitrogen LN is used as cooling medium.

The purified helium leaving purification unit 30 has a purity of 99.9999 %vol and is therefore suitable for substantially all industrial uses of helium gas. The purified helium is obtained in gaseous form at a gage pressure of more than 750 kPa (7.5 barg).

In the illustrated embodiment, the off-gas streams from which helium is to be recovered are produced in a semiconductor plant 40. Plant 40 contains multiple semiconductor facturing tools, at least some of which use helium He in their semiconductor production process and generate a helium-containing off-gas stream. Three such semiconductor tools 41, 42, 43 are shown in figure 2 for illustration purposes, though the number of these semiconductor facturing tools may be much larger. As mentioned earlier, in such a semiconductor production plant 40, the use of helium is not necessarily limited to semiconductor facturing tools and helium-containing off-gas streams may also be generated by other units (not shown) of semiconductor production plant 40.

Plant 40 is connected to a factory exhaust system 51, which collects exhaust gas streams from plant 40, whereafter the collected exhaust gas is subjected to the necessary emission-reduction measures in cleaning unit 52, before the thus cleaned exhaust gas is released into the atmosphere via stack 53.

When helium-containing off-gas streams from plant 40 are sent to exhaust system 51, the helium contained therein is lost when the off-gas is released into the atmosphere.

The aim of the present invention is to avoid, or at least to minimise, such losses.

Thereto, the semiconductor tools 41, 42, 43 (and other equipment) which produce helium-containing off-gas are fluidly connected to preconditioning unit 10.

Whereas in figure 2, each off-gas stream is generated by one single tool 42, 43, 44, an off-gas stream may also be collected from a set of semiconductor facturing tools of plant 40 (not shown), in particular when identical or substantially identical processes, generating substantially identical off-gases, take place in the tools of said set.

In the illustrated embodiment, semiconductor facturing tools 41, 42, 43 are also fluidly connected to exhaust system 51. However, the flue gas streams from said tools 41, 42, 43 are only sent to exhaust system 51 when the helium recovery system is down for maintenance or when the off-gas stream generated by said tools 41, 42, 43 contain no or only insignificant levels of helium, so that sending the corresponding off-gas stream to the helium recovery system would result in a loss of efficiency of the latter. Indeed, the composition of the off-gas stream generated by a given tool can vary over time depending on the process taking place in tools 42, 43, 44, or even the stage of a given process, making said off-gas stream suitable or unsuited for the recovery of helium therefrom. Valves A and B are used to direct a given off-gas stream to preconditioning unit 10 or to exhaust system 51. Valve C is used to open or close the access to exhaust system 51 for off-gas from semiconductor plant 40.

In accordance with the present invention, for each off-gas stream from which helium is to be recovered, components other than helium which are present in the off-gas and which are to be chemically converted and/or removed therefrom in the preconditioning unit are determined. Such determination may be achieved by real-time measurements and/or calculations. Alternatively, the information regarding the presence of these components in the generated off-gas stream may be derived from earlier measurements and/or calculations with respect to the performance of identical or highly similar processes in the tool or in tools of the same type.

Also in accordance with the present invention, preconditioning unit 10 has off-gas inlets which are associated with different stage units of preconditioning unit 10.

In figure 2, an off-gas inlet 61 is shown, which feeds into and is thus associated with stage unit S1, as well as a second off-gas inlet 62, located downstream of stage unit S1 (in the succession of stage units) and feeding into stage unit S2 with which inlet 62 is associated. In a similar manner, further off-gas inlets (not shown) may be present, which are associated with other stage units of preconditioning unit 10. For example, for maximum flexibility, each stage unit S1 to S6 of preconditioning unit 10 may have its own off-gas inlet associated therewith.

Thus, when, as is the case for tools 41 and 43, the off-gas stream generated by a given tool (or other equipment) contains, in addition to helium, combustible substances which need to be oxidised in stage unit S1, said off-gas stream is introduced into preconditioning unit 10 via inlet 61 associated with stage unit S1 and the corresponding off-gas is subjected to preconditioning in each stage unit S1 to S6, in succession. If, as is the case for tool 42, the off-gas stream generated by said tool does not contain components which must be oxidised in stage unit S1, but does contain one or more components which must be removed therefrom by chemical washing in stage unit S2, then said off-gas stream is introduced into preconditioning unit 10 via off-gas inlet 62 associated with stage unit S2, so that the corresponding off-gas is subjected to preconditioning in stage units S2 to S6, but not in stage unit S1. Although not illustrated in figure 2, a similar approach may be applied to off-gas inlets associated with the other stage units S3 to S6.

To the extent that semiconductor factoring tools 41, 42, 43 (or other equipments) may produce helium-containing off-gas streams, the composition of which varies over time, in particular with respect to the presence of components other than helium, a tool (or equipment), may be fluidly connected to several off-gas inlets of preconditioning unit 10. A valve system (not shown) directs said off-gas stream to one of off-gas inlets 61, 62 in function of the composition of the off-gas at the given moment in time.

As shown in figure 2, compressors 71, 72, 73 are provided to pressurise the off-gas streams and to transport them to the appropriate off-gas inlet 61, 62 of preconditioning unit 10. It will be appreciated that, before being introduced into preconditioning unit 10, the off-gas streams may also be subjected to other measures, such as particle separation (filtering) in order to protect the valves from erosion or corrosion or for heating in order to prevent condensation in the pipe(s)/manifold(s) transporting the off-gas stream(s) to preconditioning unit 10.

The process according to the present invention thus optimises the helium recovery from the one or more helium-containing off-gas streams in that it enables, for each off-gas stream, to determine the number of preconditioning stages to which the corresponding off-gas must be subjected, as opposed to systematically subjecting the off-gas stream or all of the off-gas streams to all of the preconditioning stages of the preconditioning units.

## Claims

1. Process for the recovery of helium from one or more than one helium-containing off-gas streams, whereby the off-gas streams are treated successively by preconditioning, cryogenic separation and purification in an installation comprising, in order of succession:
• a multi-stage preconditioning unit (10) for preconditioning off-gas so as to obtain preconditioned off-gas, the preconditioning unit comprising n stage units S1 to Sn, with n ≥ 2, each stage unit S1 to Sn being adapted to precondition off-gas by at least partially chemically converting at least one component other than helium in the off-gas and/or by at least partially removing at least one component other than helium from the off-gas, the preconditioning unit optionally comprising means (11, 12) for adjusting the temperature and/or pressure of the off-gas upstream of one or more of the stage units S1 to Sn,
• a cryogenic separation unit (20) for cryogenically separating a helium-enriched gas fraction from the preconditioned off-gas received from the preconditioning unit (10), and
• a purification unit (30) for purifying the helium-enriched gas fraction received from the cryogenic separation unit (20) so as to obtain purified helium gas with a higher helium content than the helium-enriched gas,
whereby:
• the preconditioning unit (10) has multiple off-gas inlets (61, 62), each off-gas inlet (61, 62) corresponding to one of the stage units S1 to Sn so that the off-gas of an off-gas stream introduced into the preconditioning unit (10) via one of the off-gas inlets (61, 62) is thereafter preconditioned in the corresponding stage unit,
• the stage units S1 to Sn are in linear fluid succession so that off-gas which has been preconditioned in stage unit Sx, with 1 ≤ x < n, is sent to stage unit Sx+1 for further preconditioning, whereas off-gas which has been preconditioned in stage unit Sn is sent as the preconditioned off-gas to the cryogenic separation unit (20),
whereby for each off-gas stream from which helium is to be recovered, components other than helium which are present in the off-gas and which are to be chemically converted and/or removed therefrom in the preconditioning unit (10) are determined and the off-gas inlet (61, 62) via which said off-gas stream is introduced into the preconditioning unit (10) is selected in function of said determined components.

2. Process according to claim 1, whereby the preconditioned off-gas consists:
• for between 99.0000 %vol and 100.0000 %vol of helium and air gases and/or
• for 78.0000 %vol to 100.0000 %vol of helium and nitrogen.

3. Process according to claim 1 or 2, whereby the helium-enriched gas fraction has a helium content of at least 95.0000 %vol, preferably at least 99.0000 %vol but less than 100.0000 %vol, in particular ≤ 99.9700 %vol or ≤ 99.9500 %vol.

4. Process according to any one of the preceding claims, whereby the purified helium gas has a helium content of at least 99.9900%vol and up to 100%vol, preferably at least 99.9990%vol, more preferably at least 99.9999%vol.

5. Process according to any one of the preceding claims, whereby the one or more off-gas streams include or consist of off-gas which has been generated during semiconductor manufacturing in a semiconductor manufacturing installation, the one or more off-gas streams preferably including off-gases generated by one or more than one semiconductor factoring tools .

6. Process according to claim 5, whereby at least part of the purified helium gas is recycled to and used in the semiconductor manufacturing installation, at least part of the purified helium being preferably recycled to and used in the one or more semiconductor factoring tools.

7. Process for manufacturing semiconductors, the process comprising the steps of:
• producing semiconductors in a semiconductor production installation (40), during which helium-containing off-gas is generated,
• collecting one or more streams of helium-containing off-gas from the semiconductor production installation (40), , and
• recovering purified helium from the collected off-gas streams by means of the process of any one of claims 1 to 6.

8. Process according to any one of the preceding claims, whereby the stage units S1 to Sn include one or more stage units selected from off-gas combustion units, off-gas washing units, condensation units, activated-carbon units, catalytic oxidation units, adsorption units and off-gas filter units.

9. Process according to any one of the preceding claims, whereby stage units S1 to Sn include at least one of the following units:
• off-gas combustion stage units selected from: electrically heated combustor with or without oxidant injection, natural gas heated combustors with or without oxidant injection,
• off-gas washing stage units selected from: fresh-water washers, KOH washers, NaOH washers or a succession of at least two of these washers with a fresh water washer as the final washer,
• condensation stage units selected from coolant-cooled heat exchanger and separator units,
• off-gas catalytic oxidation stage units selected from: heterogeneous catalytic oxidation units with palladium and or silver as catalytic active component,
• adsorption stage units selected from: adsorption units with aluminum oxide adsorbents and/or molecular sieve adsorbents.

10. Process according to any one of the preceding claims, whereby the preconditioning unit comprises means (11, 12) for adjusting the temperature and/or pressure of the off-gas upstream of one or more of the stage units S1 to Sn.

11. Process according to claim 10, whereby the preconditioning unit comprises means (12) for adjusting the temperature of the off-gas upstream of one or more of the stage units S1 to Sn selected from electrical gas heating units, gas/gas heat exchange units, gas/liquid heat exchange units and adiabatic compression heaters.

12. Process according to claim 10 or 11, whereby the preconditioning unit comprises at least one compressor or expander for adjusting the pressure of the off-gas upstream of one or more of the stage units S1 to Sn.

13. Process according to any one of the preceding claims, whereby the gas-preconditioning unit comprises:
• an off-gas combustion stage unit and an off-gas washer downstream of the off-gas combustion stage unit; or
• an off-gas washer, a condensation stage unit downstream of the off-gas washer and an activated-carbon stage unit downstream of the condensation stage unit; or
• an adiabatic compression heater, a catalytic oxidation stage unit downstream of the adiabatic compression heater, an off-gas cooling unit downstream of the catalytic oxidation unit and an adsorption stage unit downstream of the off-gas cooling unit; or
• an off-gas heating unit and a catalytic oxidation stage unit downstream of the off-gas heating unit; or
• an adsorption stage unit and an off-gas filter stage unit downstream of the adsorption stage unit.

14. Process according to any one of the preceding claims, whereby in the cryogenic separation unit the helium-enriched gas fraction is separated from the preconditioned off-gas using one or more cryogenic separation processes selected from the group consisting of:
• cryogenic distillation and
• cryogenic condensation.

15. Process according to any one of the preceding claims, whereby in the purification unit, the helium-enriched gas fraction is purified into the purified helium gas using one or more purification processes selected from the group consisting of:
• adsorption processes; and
• processes comprising catalytic oxidation followed by adsorption.
